(19)

Europäisches
Patentamt
European
Patent Office
Office européen
des brevets

(11)  **EP 2 806 695 A1**

(12)  **EUROPEAN PATENT APPLICATION**

(43) Date of publication:
  26.11.2014  Bulletin 2014/48

(51) Int Cl.:
  *H04W 52/02* (2009.01)    *H04W 84/04* (2009.01)
  *H04W 88/08* (2009.01)

(21) Application number: **13193153.7**

(22) Date of filing: **15.11.2013**

(84) Designated Contracting States:
  **AL AT BE BG CH CY CZ DE DK EE ES FI FR GB
  GR HR HU IE IS IT LI LT LU LV MC MK MT NL NO
  PL PT RO RS SE SI SK SM TR**
  Designated Extension States:
  **BA ME**

(30) Priority: **21.03.2013  KR 20130030576**

(71) Applicant: **Samsung Electronics Co., Ltd
  Gyeonggi-do 443-742 (KR)**

(72) Inventors:
  • **Bang, Jong-ho
   449-712 Gyeonggi-do (KR)**

  • **Kim, Sung-jin
   449-712 Gyeonggi-do (KR)**
  • **Choi, Jin-hyeock
   449-712 Gyeonggi-do (KR)**
  • **Lee, Sang-hyun
   449-712 Gyeonggi-do (KR)**

(74) Representative: **Portch, Daniel
  Elkington and Fife LLP
  Prospect House
  8 Pembroke Road
  Sevenoaks, Kent TN13 1XR (GB)**

(54)  **Method, apparatuses and system for switching off power of base stations within a cellular network by using message passing**

(57)  A method of determining whether to switch off a base station's own power in the base station within a cellular network may comprise: receiving terminal messages having real number values from terminals within cell coverage of the base station; calculating real number values of base-station messages individually regarding the terminals based on the received terminal messages; transmitting the base-station messages having the calculated real number values individually to the terminals; repeatedly performing the receiving, the calculating, and the transmitting until the calculated real number values of the base-station messages are converged to constant values; when the real number values of the base-station messages are converged, calculating a base-station message convergence value, which is one real number value regarding the terminals, based on the converged real number values of the terminal messages; and/or determining whether to switch off the base station's own power based on the base-station message convergence value.

FIG. 4

START

RECEIVE TERMINAL MESSAGES FROM TERMINALS IN CELL COVERAGE OF BASE STATION — 410

CALCULATE REAL NUMBER VALUES OF BASE-STATION MESSAGES BASED ON RECEIVED TERMINAL MESSAGES — 420

TRANSMIT BASE-STATION MESSAGES HAVING CALCULATED REAL NUMBER VALUES INDIVIDUALLY TO TERMINALS — 430

ARE REAL NUMBER VALUES OF BASE-STATION MESSAGES CONVERGED TO CONSTANT VALUES? — 440  NO

YES

CALCULATE BASE-STATION MESSAGE CONVERGENCE VALUE BASED ON CONVERGED REAL NUMBER VALUES OF TERMINAL MESSAGES — 450

DETERMINE WHETHER TO SWITCH OFF POWER OF BASE STATION BASED ON BASE-STATION MESSAGE CONVERGENCE VALUE — 460

END

EP 2 806 695 A1

**Description**

FIELD OF THE INVENTION

Some example embodiments may generally relate to methods of switching off power of base stations within cellular networks by using message passing. Some example embodiments may generally relate to base stations and/or cellular network systems using the methods.

BACKGROUND OF THE INVENTION

Currently, a great increase in communication traffic is followed by an increase in mobile terminals such as laptop computers, personal digital assistants (PDAs), and smartphones. In order to satisfy the increased communication traffic, the amount of requested communication traffic is processed by installing base stations to overlap each other in a region where communication traffic is concentrated.

However, the amount of requested communication traffic in one region is not always constant. In particular, in a region where communication traffic is concentrated, the amount of requested communication traffic may be greatly reduced according to time. In spite of a great change in the amount of requested communication traffic, if all base stations installed to overlap each other operate all the time, energy is unnecessarily wasted. As such, by switching off power of some base stations when the amount of requested traffic is reduced, unnecessary power consumption may be minimized and energy may be saved.

SUMMARY OF THE INVENTION

Some example embodiments may provide methods of switching off power of base stations within cellular networks by using message passing. Some example embodiments may provide base stations and/or cellular network systems using the methods.

Some example embodiments may provide computer-readable recording media having recorded thereon computer programs for executing the methods.

In some example embodiments, a method of determining whether to switch off a base station's own power in the base station within a cellular network may comprise: receiving terminal messages having real number values from terminals within cell coverage of the base station; calculating real number values of base-station messages individually regarding the terminals based on the received terminal messages; transmitting the base-station messages having the calculated real number values individually to the terminals; repeatedly performing the receiving, the calculating, and the transmitting until the calculated real number values of the base-station messages are converged to constant values; when the real number values of the base-station messages are converged, calculating a base-station message convergence value, which is one real number value regarding the terminals, based on the converged real number values of the terminal messages; and/or determining whether to switch off the base station's own power based on the base-station message convergence value.

In some example embodiments, the calculating of the real number values of the base-station messages may comprise calculating the real number values of the base-station messages individually regarding the terminals based on the real number values of the terminal messages and their combinations according to whether a maximum data transmission rate of the base station is providable given an amount of data requested by each of the terminals or their combinations.

In some example embodiments, the determining may comprise determining to switch off the power of the base station if the base-station message convergence value is a negative value.

In some example embodiments, in the calculating of the real number values of the base-station messages, a probability that the power of the base station is switched off may be higher when there are more negative values among the real number values of the base-station messages than when there are fewer negative values among the real number values of the base-station messages, a number of negative values may be larger when power requested to switch on the base station is larger than a first figure than when power requested to switch on the base station is smaller than the first figure, the number of the negative values may be larger when a maximum data transmission rate of the base station is smaller than a second figure than when the maximum data transmission rate of the base station is larger than the second figure, the number of the negative values may be larger when there are fewer terminals for receiving data transmission within cell coverage of the base station than when there are more terminals for receiving data transmission within cell coverage of the base station, and/or the number of the negative values may be larger when transmission power between the base station and the terminals within the cell coverage is larger than a third figure than when the transmission power between the base station and the terminals within the cell coverage is smaller than the third figure.

In some example embodiments, the real number values of the base-station messages may be calculated according to an equation,

$$\alpha_{ia}^{(t)} = g_{ia}^{\left|N(i)\right|}(C_i - C_a) - \max(g_{ia}^{\left|N(i)\right|}(C_i - C_a), P_i)$$

where $\alpha_{ia}^{(t)}$ indicates the real number value of the base-station message calculated at a point of time 't', 't' indicates an identifier for temporally identifying the base-station messages that are repeatedly transmitted, $|N(i)|$ indicates a number of the terminals other than a target terminal within the cell coverage of the base station, the target terminal indicating a terminal to which the base-station message is transmitted, $C_i$ indicates a maximum data transmission rate of the base station, $C_a$ indicates an amount of data requested by the target terminal, and $P_i$ indicates power requested to switch on the base station. In the above equation, the function $g_{ia}^{n}$ is defined as

$$g_{ia}^{n}(z) = \max(g_{ia}^{n-1}(z), g_{ia}^{n-1}(z - C_{b_n}) + \rho_{ib_n}^{(t)})$$

where 'n' and 'z' indicate variables of the function $g_{ia}^{n}$, $C_{bn}$ indicates an amount of data requested by adjacent terminals of the target terminal, $\rho_{ib_n}$ indicates the real number values of the terminal messages received from the adjacent terminals, and the adjacent terminals indicate terminals other than the target terminal from among terminals within the cell coverage of the base station.

In some example embodiments, the base-station message convergence value may be calculated according

to $\alpha_i = g_i^{\left|N(i)\right|+1}(C_i)$,

where $\alpha_i$ indicates the base-station message convergence value regarding the terminals, $|N(i)| + 1$ indicates a number of the terminals within the cell coverage of the base station, and $C_i$ indicates a maximum data transmission rate of the base station.

In some example embodiments, the converged real number values of the base-station messages and the converged real number values of the terminal messages may correspond to best solutions of a combinatorial optimization problem for minimizing overall power consumption of the cellular network including the base station and adjacent base stations, from among available data transmission methods between the base stations and the terminals, which satisfy an amount of data requested by all terminals within the cellular network.

In some example embodiments, in the cellular network including the base station and adjacent base stations, each of the base station and the adjacent base stations may determine whether to switch off its own power based on repeated exchanges of the terminal messages and the base-station messages with the terminals within its cell coverage, and/or each of the terminals within the cellular network may determine a base station from which data transmission is to be received, based on repeated exchanges of the base-station messages and the terminal messages with the base stations capable of providing data transmission to the terminal.

In some example embodiments, the real number values of the terminal messages of each terminal may be calculated based on transmission power between the terminal and a target base station indicating a base station to which the terminal message is transmitted, transmission power between the terminal and the adjacent base stations, and the base-station messages received from the adjacent base stations. The adjacent base stations may indicate base stations other than the target base station from among the base stations capable of providing data transmission to the terminal.

In some example embodiments, the terminal may calculate a real number value of a terminal message regarding each of the adjacent base stations, may calculate a sum of the calculated real number value and a real number value of a base-station message received from the target base station, and/or may determine a base station from which data transmission is to be received, based on the calculated sum regarding each of the base stations.

In some example embodiments, when the real number value of the terminal message regarding each of the adjacent base stations is converged to a constant value, if the calculated sum is a positive value, the terminal may receive data transmission from the base station.

In some example embodiments, a probability that the terminal receives data transmission from the target base station may be higher when transmission power between the target base station and the terminal is lower than a fourth figure than when the transmission power between the target base station and the terminal is higher than the fourth figure.

In some example embodiments, the real number values of the terminal messages of each terminal may be calculated according to an equation,

$$ \rho_{ia}^{(t)} = \min_{j \in N(a)/i} (P_{ja} - \alpha_{ja}^{(t)}) - P_{ia} $$

where $\rho_{ia}^{(t)}$ indicates the real number value of the terminal message calculated by the terminal at a point of time 't', 't' indicating an identifier for temporally identifying the terminal messages that are repeatedly transmitted, $P_{ja}$ indicates transmission power between each of adjacent base stations and the terminal, $\alpha_{ja}^{(t)}$ indicates the real number value of the base-station message calculated at the point of time 't' and transmitted to the terminal by the adjacent base station, and

$P_{ia}$ indicates transmission power between the terminal and a target base station indicating a base station to which the terminal message is transmitted, and the adjacent base stations indicate base stations other than the target base station from among the base stations capable of providing data transmission to the terminal.

In some example embodiments, a computer-readable recording medium may have recorded thereon a program for executing the methods described.

In some example embodiments, a base station for determining whether to switch off its own power within a cellular network may comprise: a reception unit configured to receive terminal messages having real number values from terminals within cell coverage of the base station; a calculation unit configured to calculate real number values of base-station messages individually regarding the terminals based on the received terminal messages; a transmission unit configured to transmit the base-station messages having the calculated real number values individually to the terminals; and/or a determination unit configured to determine whether to switch off the power of the base station based on a base-station message convergence value. The reception unit may be further configured to repeatedly receive, the calculation unit is further configured to repeatedly calculate, and the transmission unit is further configured to repeatedly transmit until the calculated real number values of the base-station messages are converged to constant values. When the real number values of the base-station messages are converged, the calculation unit may be further configured to calculate the base-station message convergence value, which is one real number value regarding the terminals, based on the converged real number values of the terminal messages.

In some example embodiments, the calculation unit may be further configured to calculate the real number values of the base-station messages according to an equation,

$$ \alpha_{ia}^{(t)} = g_{ia}^{|N(i)|}(C_i - C_a) - \max(g_{ia}^{|N(i)|}(C_i - C_a), P_i) $$

where $\alpha_{ia}^{(t)}$ indicates the real number value of the base-station message calculated at a point of time 't', 't' indicating an identifier for temporally identifying the base-station messages that are repeatedly transmitted, $|N(i)|$ indicates a number of terminals other than a target terminal within the cell coverage of the base station, the target terminal indicates a terminal to which the base-station message is transmitted, $C_i$ indicates a maximum data transmission rate of the base station,

$C_a$ indicates an amount of data requested by the target terminal, and $P_i$ indicates power requested to switch on the base station, and wherein in the above equation, the function $g_{ia}^{n}$ is defined as

$$g_{ia}^{n}(z) = \max(g_{ia}^{n-1}(z), g_{ia}^{n-1}(z - C_{b_n}) + \rho_{ib_n}^{(t)})$$ ,

where 'n' and 'z' indicate variables of the function $g_{ia}^{n}$, $C_{bn}$ indicates an amount of data requested by adjacent terminals of the target terminal, $\rho_{ib_n}$ indicates the real number values of the terminal messages received from the adjacent terminals, and the adjacent terminals indicate terminals other than the target terminal from among terminals within the cell coverage of the base station.

In some example embodiments, the calculation unit may be further configured to calculate the base-station message convergence value according to

$$\alpha_i = g_i^{|N(i)|+1}(C_i)$$ ,

where $\alpha_i$ indicates the base-station message convergence value regarding the terminals,
$|N(i)| + 1$ indicates the number of terminals within the cell coverage of the base station, and $C_i$ indicates a maximum data transmission rate of the base station, and wherein the determination unit is further configured to determine to switch off the power of the base station if the base-station message convergence value is a negative value.

In some example embodiments, a real number value of a terminal message of each terminal may be calculated according to an equation,

$$\rho_{ia}^{(t)} = \min_{j \in N(a)/i}(P_{ja} - \alpha_{ja}^{(t)}) - P_{ia}$$

where $\rho_{ia}^{(t)}$ indicates the real number value of the terminal message calculated by the terminal at a point of time 't', 't' indicates an identifier for temporally identifying the terminal messages that are repeatedly transmitted, $P_{ja}$ indicates transmission power between each adjacent base station and the terminal, $\alpha_{ja}^{(t)}$ indicates a real number value of a base-station message calculated at the point of time 't' and transmitted to the terminal by the adjacent base station, and $P_{ia}$ indicates transmission power between the terminal and a target base station indicating a base station to which the terminal message is transmitted, and the adjacent base stations indicate base stations other than the target base station from among base stations capable of providing data transmission to the terminal.

In some example embodiments, each terminal may calculate a real number value of a terminal message regarding adjacent base stations, may calculate a sum of the calculated real number value and a real number value of a base-station message received from a target base station, and/or may determine a base station from which data transmission is to be received, based on the calculated sum regarding each of the base stations. When the real number value of the terminal message regarding each of the adjacent base stations is converged to a constant value, if the calculated sum is a positive value, the terminal may receive data transmission from the base station. The target base station may indicate a base station to which the terminal message is transmitted, and/or the adjacent base stations may indicate base stations other than the target base station from among base stations capable of providing data transmission to the terminal.

In some example embodiments, a cellular network system may comprise: base stations for individually determining whether to switch off their own power based on message exchanges with terminals within their cell coverage; and/or the terminals for individually determining the base stations from which data transmission is received, from among the base stations capable of providing data transmission to the terminals, based on the message exchanges with the base stations. Each of the base stations may receive the terminal messages having real number values from the terminals, may calculate real number values of base-station messages individually regarding the terminals based on the received terminal messages, may transmit the base-station messages having the calculated real number values individually to the terminals, may repeatedly perform the receiving, the calculating, and the transmitting until the calculated real number values of the base-station messages are converged to constant values. When the real number values of the base-station messages are converged, each of the base stations may calculate a base-station message convergence value, which is one real number value regarding the terminals, based on the converged real number values of the terminal messages, and/or may determine whether to switch off the power of the base station based on the base-station message convergence value. Each of the terminals may calculate a real number value of a terminal message regarding each of the base stations, may calculate a sum of the calculated real number value and a real number value of a base-station message received from a base station, and/or may determine a base station from which data transmission is to be received, based on the calculated sum regarding each of the base stations.

In some example embodiments, a method of determining whether to switch off power to a base station of a cellular network may comprise: receiving terminal messages having first values from terminals within cell coverage of the base station; individually calculating second values of base-station messages for the terminals based on the received terminal messages; individually transmitting the base-station messages having the calculated second values to the terminals; repeatedly performing the receiving, calculating, and transmitting until the calculated second values of the base-station messages converge; after the calculated second values of the base-station messages converge, calculating a base-station message convergence value based on converged first values of the terminal messages; and/or switching off the power based on the base-station message convergence value.

In some example embodiments, the power may be switched off if the base-station message convergence value is a negative value.

In some example embodiments, the power may not be switched off if the base-station message convergence value is a positive value.

In some example embodiments, the method may further comprise checking whether the calculated second values of the base-station messages converge.

In some example embodiments, the individually transmitting the base-station messages having the calculated second values to the terminals may precede the checking whether the calculated second values of the base-station messages converge.

In some example embodiments, the checking whether the calculated second values of the base-station messages converge may precede the individually transmitting the base-station messages having the calculated second values to the terminals.

BRIEF DESCRIPTION OF THE EMBODIMENTS

The above and/or other aspects and advantages will become more apparent and more readily appreciated from the following detailed description of example embodiments, taken in conjunction with the accompanying drawings, in which:

FIGS. 1A and 1B are diagrams showing a cellular network environment;
FIG. 2 is a diagram showing a cellular network system in which individual base stations within a cellular network switch off their own power by using message passing, according to some example embodiments;
FIG. 3 is a block diagram of a base station that switches off its own power by using message passing, according to some example embodiments;
FIG. 4 is a flowchart of a method of switching off an base station's own power in the base station within a cellular network by using message passing, according to some example embodiments; and
FIGS. 5A and 5B are graphs showing that a base station switching off method is applied to an arbitrary two-dimensional (2D) cellular network, according to some example embodiments.

DETAILED DESCRIPTION OF THE DRAWINGS

Example embodiments will now be described more fully with reference to the accompanying drawings. Embodiments, however, may be embodied in many different forms and should not be construed as being limited to the embodiments set forth herein. Rather, these example embodiments are provided so that this disclosure will be thorough and complete, and will fully convey the scope to those skilled in the art. In the drawings, the thicknesses of layers and regions may be exaggerated for clarity.

It will be understood that when an element is referred to as being "on," "connected to," "electrically connected to," or "coupled to" to another component, it may be directly on, connected to, electrically connected to, or coupled to the other component or intervening components may be present. In contrast, when a component is referred to as being "directly on," "directly connected to," "directly electrically connected to," or "directly coupled to" another component, there are no intervening components present. As used herein, the term "and/or" includes any and all combinations of one or more of the associated listed items.

It will be understood that although the terms first, second, third, etc., may be used herein to describe various elements, components, regions, layers, and/or sections, these elements, components, regions, layers, and/or sections should not be limited by these terms. These terms are only used to distinguish one element, component, region, layer, and/or section from another element, component, region, layer, and/or section. For example, a first element, component, region, layer, and/or section could be termed a second element, component, region, layer, and/or section without departing from the teachings of example embodiments.

Spatially relative terms, such as "beneath," "below," "lower," "above," "upper," and the like may be used herein for ease of description to describe the relationship of one component and/or feature to another component and/or feature, or other component(s) and/or feature(s), as illustrated in the drawings. It will be understood that the spatially relative terms are intended to encompass different orientations of the device in use or operation in addition to the orientation depicted in the figures.

The terminology used herein is for the purpose of describing particular example embodiments only and is not intended to be limiting of example embodiments. As used herein, the singular forms "a," "an," and "the" are intended to include the plural forms as well, unless the context clearly indicates otherwise. It will be further understood that the terms "comprises," "comprising," "includes," and/or "including," when used in this specification, specify the presence of stated features, integers, steps, operations, elements, and/or components, but do not preclude the presence or addition of one or more other features, integers, steps, operations, elements, components, and/or groups thereof.

Example embodiments may be described herein with reference to cross-sectional illustrations that are schematic illustrations of idealized example embodiments (and intermediate structures). As such, variations from the shapes of the illustrations as a result, for example, of manufacturing techniques and/or tolerances, are to be expected. Thus, example embodiments should not be construed as limited to the particular shapes of regions illustrated herein but are to include deviations in shapes that result, for example, from manufacturing. For example, an implanted region illustrated as a rectangle will typically have rounded or curved features and/or a gradient of implant concentration at its edges rather than a binary change from implanted to non-implanted region. Likewise, a buried region formed by implantation may result in some implantation in the region between the buried region and the surface through which the implantation takes place. Thus, the regions illustrated in the figures are schematic in nature, their shapes are not intended to illustrate the actual shape of a region of a device, and their shapes are not intended to limit the scope of the example embodiments.

Unless otherwise defined, all terms (including technical and scientific terms) used herein have the same meaning as commonly understood by one of ordinary skill in the art to which example embodiments belong. It will be further understood that terms, such as those defined in commonly used dictionaries, should be interpreted as having a meaning that is consistent with their meaning in the context of the relevant art and should not be interpreted in an idealized or overly formal sense unless expressly so defined herein.

Reference will now be made to example embodiments, which are illustrated in the accompanying drawings, wherein like reference numerals may refer to like components throughout.

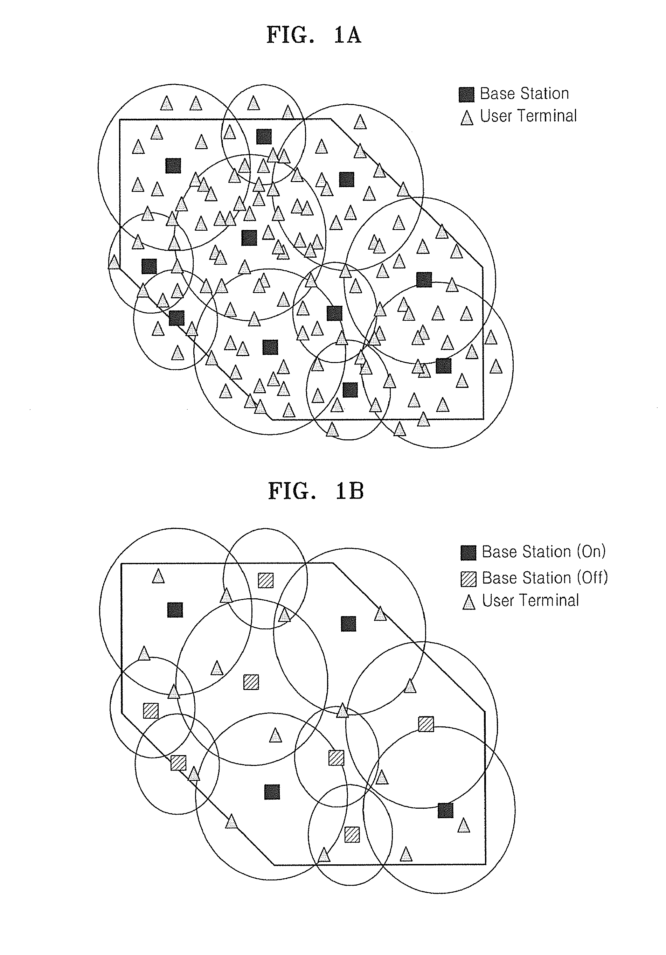

FIGS. 1A and 1B are diagrams showing a cellular network environment. Referring to FIGS. 1A and 1B, a circle, ellipse, oval, etc. around each base station marked as ■ indicates cell coverage of the base station, and user terminals marked as ∆ are distributed within the cell coverage of each base station. The cell coverage refers to a service region where each base station may provide a communication service. As such, each base station may provide data transmission to user terminals in its cell coverage. A user terminal may also be referred to a mobile station, a mobile node, or user equipment. In the following description, for convenience of explanation, a user terminal may be referred to as a terminal.

FIGS. 1A and 1B show a cellular network environment in a region where communication traffic is highly concentrated. In the region, as illustrated in FIGS. 1A and 1B, base stations are installed to overlap each other so as to meet the amount of requested communication traffic of terminals in the region.

However, the same level of communication traffic does not occur for 24 hours a day in this region. The amount of communication traffic in this region may be greatly reduced at night. FIG. 1A shows that communication traffic is concentrated in the daytime, and FIG. 1B shows that communication traffic is greatly reduced at night or on weekends or holidays.

When communication traffic is reduced as illustrated in FIG. 1B, if all base stations installed to overlap each other in this region operate as in the daytime, unnecessary power consumption is generated. In particular, considering that energy required to operate a base station in a cellular network is very high, energy is significantly consumed due to unnecessary operation of base stations.

As such, if the amount of requested traffic is low, a cellular network system may switch off a large number of base stations by inducing terminals to use other overlapping base stations in a cellular network.

Accordingly, by switching off some of the base stations installed to overlap each other in this region for a certain period of time, unnecessary waste of energy may be prevented. As described above, reducing energy consumption of a cellular network by switching off some base stations when the amount of requested communication traffic is not high is referred to as green communication.

For example, if a total amount of traffic in a desired region (that may or may not be predetermined) is reduced below a desired level (that may or may not be predetermined), for green communication, a cellular network system determines some base stations to be switched off from among base stations within a cellular network, and designates other base stations to handle traffic of the switched-off base stations. The cellular network system switches off the determined base stations in the cellular network, and distributes data transmission of the switched-off base stations to other base stations in the cellular network.

Referring to FIG. 1B, some base stations are switched off due to reduced communication traffic. Accordingly, the cellular network system in this region processes the amount of requested communication traffic by using only the remaining switched-on base stations.

In this case, switching off a base station refers to switching off units required for the base station to provide a communication service to terminals, i.e., minimizing power consumption of the base station by putting the base station in a sleep mode.

Conditions/Equations 1 below show a condition to be satisfied to switch off base stations' power in a cellular network environment. That is, in order to meet the amount of data requested by all terminals with minimum power, the following condition has to be satisfied.

[Conditions/Equations 1]

$$\min \sum_{(i,a)\in E} P_{ia}x_{ia} + \sum_{i\in V_B} P_i x_i$$

$$s.t. \sum_{i\in N(a)} x_{ia} = 1$$

$$\sum_{a\in N(i)} C_{ia}x_{ia} \leq C_i x_i$$

$$x_{ia}, x_i \in \{0,1\}$$

In this case, $x_{ia}$ is a binary variable indicating a connection state between a base station 'i' and a terminal 'a'. If $x_{ia}$ is 1, it indicates that the base station 'i' and the terminal 'a' are connected and thus are communicable with each other. If $x_{ia}$ is 0, it indicates that the base station 'i' and the terminal 'a' are disconnected.

$X_i$ is a binary variable indicating a power providing state of the base station 'i'. If $x_i$ is 1, it indicates that the base station 'i' is switched on. If $x_i$ is 0, it indicates that the base station 'i' is switched off.

$P_{ia}$ indicates power consumed when the base station 'i' and the terminal 'a' are connected, i.e., transmission power between the base station 'i' and the terminal 'a'. As such, if the base station 'i' and the terminal 'a' are connected ($x_{ia} = 1$), the transmission power corresponding to $P_{ia}$ is consumed. Otherwise ($x_{ia} = 0$), the transmission power is not consumed. The symbol "s.t." means "such that".

$P_i$ indicates power consumed to switch on the base station 'i', $C_i$ indicates a maximum data transmission capacity of the base station 'i', and $C_a$ indicates the amount of data requested by the terminal 'a'. 'C' indicating the amount of data may be represented as the amount of data transmission per unit time, which is obtained by dividing the amount of data by time, i.e., a transmission rate. As such, $C_i$ may indicate a maximum data transmission rate of the base station 'i', and $C_a$ may indicate a data transmission rate requested by the terminal 'a'.

In Conditions/Equations 1, 'E' indicates connections between all base stations and all terminals included in a cellular network, and $V_B$ indicates a set of base stations included in the cellular network. N(i) indicates a set of terminals in cell coverage of the base station 'i', and N(a) indicates a set of base stations from which the terminal 'a' may receive data transmission.

As such, in Conditions/Equations 1, the first condition $\sum_{i \in N(a)} x_{ia} = 1$ indicates that all terminals are connected to base stations. The second condition $\sum_{a \in N(i)} C_a x_{ia} \leq C_i x_i$ indicates that a maximum data transmission capacity of a switched-on base station is greater than or equal to the amount of data requested by terminals connected thereto. The third condition $x_{ia}, x_i \in \{0,1\}$ indicates that the connection state $x_{ia}$ between the base station 'i' and the terminal 'a' and the power providing state $x_i$ of the base station 'i' are only 0 or 1.

The equation $\min \sum_{(i,a) \in E} P_{ia} x_{ia} + \sum_{i \in V_B} P_i x_i$ according to the above conditions indicates that the amount of data provided by switched-on base stations meets the amount of data requested by terminals within a cellular network of a corresponding region, and that power required to switch on base stations and transmission power required for the switched-on base stations to provide data transmission to terminals are minimized.

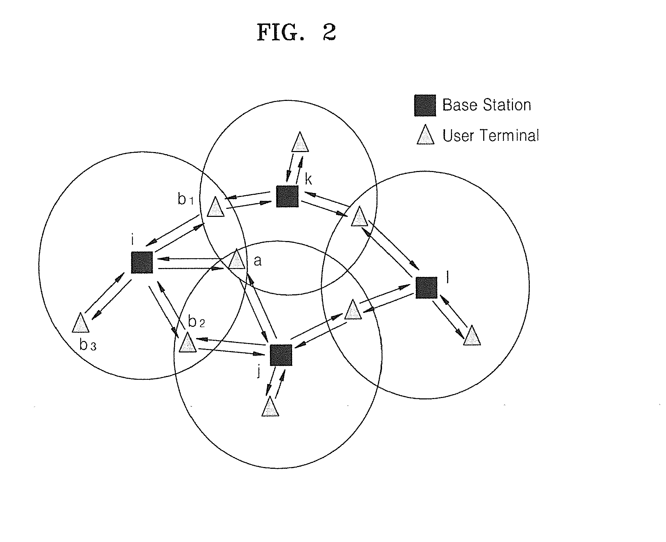

In a cellular network system according to some example embodiments, without using a power control device or a repeater between base stations, by using only message passing between a base station and terminals, a base station switching off method optimized to meet the amount of data requested by all terminals with minimum power may be achieved. Thus low-power green communication may be realized without additional costs. Detailed descriptions of some example embodiments will be provided with reference to FIGS. 2 through 5.

FIG. 2 is a diagram showing a cellular network system in which individual base stations within a cellular network switch off their own power by using message passing, according to some example embodiments. Like FIGS. 1A and 1B, in FIG. 2, ■ indicates base stations and △ indicates user terminals. Also, a circle, ellipse, oval, etc. around each base station indicates cell coverage of the base station ■. In the following description, for convenience of explanation, a user terminal may be referred to as a terminal. In the cellular network system according to some example embodiments, the base stations are installed to have overlapping cell coverage.

Referring to FIG. 2, it is shown that messages are exchanged between base stations and terminals in a cellular network. That is, each of the base stations 'i', 'j', and 'k', and '1' in the cellular network transmits messages to terminals within its cell coverage, and the terminals that receive the messages return messages to the base station. In the following description, for convenience of explanation, a message transmitted from a base station to a terminal is referred to as a base-station message, and a message transmitted from a terminal to a base station is referred to as a terminal message.

According to some example embodiments, each base station determines whether to switch off its own power based on message passing with terminals within its cell coverage. Each terminal determines a base station from which data transmission is to be received, from among base stations capable of providing data transmission to the terminal, based on message passing.

Each of the terminals and the base stations calculates a real number value, and exchanges a message having the calculated real number value.

Initially, each base station receives terminal messages having real number values from terminals, and calculates real number values of base-station messages regarding the terminals based on the received terminal messages. The base station transmits the base-station messages, having the real number values calculated with regard to the terminals, individually to the terminals. In this case, a real number value of a base-station message transmitted from a base station to a terminal may be calculated as shown in Equation 2.

[Equation 2]

$$\alpha_{ia}^{(t)} = g_{ia}^{|N(i)|}(C_i - C_a) - \max(g_{ia}^{|N(i)|}(C_i - C_a), P_i)$$

In this case, Equation 2 shows a base-station message transmitted from a base station 'i' to a target terminal 'a'. The target terminal 'a' indicates a terminal to which the base-station message is transmitted. In Equation 2, $\alpha_{ia}^{(t)}$ indicates a real number value of a base-station message calculated at a point of time 't', $|N(i)|$ indicates the number of terminals other than the target terminal 'a' in cell coverage of the base station 'i', $C_i$ indicates a maximum data transmission capacity of the base station 'i', $C_a$ indicates the amount of data requested by the target terminal 'a', and $P_i$ indicates power requested to switch on the base station 'i'.

'C' indicating the amount of data may be represented as the amount of data transmission per a unit time, which is obtained by dividing the amount of data by time, i.e., a transmission rate. As such, $C_i$ may indicate a maximum data transmission rate supportable by the base station 'i', and $C_a$ may indicate a data transmission rate requested by the target terminal 'a'.

In this case, 't' indicates an identifier for temporally identifying base-station messages that are repeatedly transmitted. For example, 't' may be represented as t = 0, 1, 2, 3, 4, 5, ......, and thus may indicate a transmission order of base-station messages. That is, when t = 1, $\alpha_{ia}^{1}$ indicates a base-station message received by the target terminal 'a' from the base station 'i'.

In Equation 2, $\max(g_{ia}^{|N(i)|}(C_i - C_a), P_i)$ indicates a greater value between $g_{ia}^{|N(i)|}(C_i - C_a)$ and $P_i$. That is, by using the amount of data obtained by subtracting the amount of data requested by the target terminal 'a' from the maximum data transmission capacity of the base station 'i', power required to provide data transmission to adjacent terminals and power required to switch on the base station 'i' are compared.

In this case, if $g_{ia}^{|N(i)|}(C_i - C_a)$ is greater than $P_i$, $\alpha_{ia}^{(t)}$ is 0. Otherwise, if $g_{ia}^{|N(i)|}(C_i - C_a)$ is less than $P_i$, $\alpha_{ia}^{(t)}$ has a negative value.

The function $g_{ia}^{n}$ in Equation 2 may be defined as shown in Equation 3.

[Equation 3]

$$g_{ia}^{n}(z) = \max(g_{ia}^{n-1}(z), g_{ia}^{n-1}(z - C_{b_n}) + \rho_{ib_n}^{(t)})$$

In Equation 3, 'n' and 'z' indicate variables of the functions $g_{ia}^{n}$, $C_{bn}$ indicates the amount of data requested by adjacent terminals b1, b2, and b3 of the target terminal 'a', and $\rho_{ibn}$ indicates real number values of terminal messages received from the adjacent terminals b1, b2, and b3. The adjacent terminals b1, b2, and b3 indicate terminals other than the target terminal 'a' from among terminals within cell coverage of the base station 'i'. As such, the base-station message

$\alpha_{ia}^{(t)}$ may be obtained by repeatedly calculating the function $g_{ia}^n$.

Also, the real number value $\alpha_{ia}^1$ of the base-station message when t = 1 may be calculated based on terminal messages $\rho_{ib_n}^0$ when t = 0.

n In this case, an initial value of the function $g_{ia}^n$ is given as shown in Equation 4.

[Equation 4]

$$g_{ia}^0(z) = \log I[z \geq 0]$$

In Equation 4, 'I' is given as shown in Equation 5.

[Equation 5]

$$I = \begin{cases} 1, z > 0 \\ 0, otherwise \end{cases}$$

If 'z' is greater than 0, i.e., if 'z' is a positive value, 'I' is 1. Otherwise, i.e., if 'z' is 0 or a negative value, 'I' is 0.

When $g_{ia}^0(C_i - C_a)$ is given as an example, if the maximum data transmission capacity $C_i$ of the base station 'i' is greater than the amount of requested data $C_a$ of the target terminal 'a', I = 1 and thus $g_{ia}^0 = \log I = 0$. Also, if the maximum data transmission capacity $C_i$ of the base station 'i' is less than the amount of requested data $C_a$ of the target terminal 'a', I = 0 and thus $g_{ia}^0 = \log I = -\infty$. That is, if the base station 'i' may not support the amount of data requested by the target terminal 'a', $-\infty$ is obtained.

A real number value of a base-station message transmitted from the base station 'i' to the target terminal 'a' is calculated according to Equations 2 through 5. The real number value of the base-station message is calculated based on real number values $\rho_{ibn}$ of terminal messages and their combinations according to whether the maximum data transmission capacity of the base station 'i' may provide amount of data requested by each of terminals or their combinations.

The base station 'i' calculates real number values of base-station messages regarding the terminals b1, b2, and b3 within cell coverage of the base station 'i' by using the above-described method. The base station 'i' transmits the base-station messages having the real number values calculated, with regard to the terminals, individually to the terminals.

The base station 'i' receives terminal messages from the terminals, and repeatedly calculates real number values of base-station messages regarding the terminals and transmits the base-station messages having the real number values calculated with regard to the terminals, individually to the terminals. Due to the above-described repeated message passing, the calculated real number values of the base-station messages are converged to constant values.

When real number values of base-station messages are converged, the base station 'i' ultimately calculates a base-station message convergence value. The base-station message convergence value is calculated as one real number value regarding all terminals based on converged real number values of terminal messages received when real number values of base-station messages are converged.

The base-station message convergence value may be calculated as shown in Equation 6.

[Equation 6]

$$\alpha_i = g_i^{|N(i)|+1}(C_i)$$

In this case, $\alpha_i$ indicates a base-station message convergence value regarding all terminals, $|N(i)| + 1$ indicates the number of all terminals within cell coverage of a base station, and $C_i$ indicates a maximum data transmission rate of the base station.

The function $g_i^n$ of Equation 6 is calculated the same as the function $g_{ia}^n$. However, the function $g_{ia}^n$ is an operation regarding the target terminal 'a' of the base station 'i', and the function $g_i^n$ is an operation regarding all terminals of the base station 'i'.

The base station 'i' determines whether to switch off its own power based on the calculated base-station message convergence value, and is switched off. That is, if the base-station message convergence value is a negative value, the base station 'i' switches off itself. If the base-station message convergence value is a positive value, the base station 'i' is continuously switched on.

Since the base-station message convergence value is calculated based on converged real number values of terminal messages, and the real number values of the terminal messages are calculated based on real number values of base-station messages, the base-station message convergence value is influenced by the real number values of the base-station messages calculated while message passing is repeated.

As such, if a large number of real number values of base-station messages calculated by the base station 'i' with regard to terminals are negative values, a probability that the base station 'i' switches off itself is increased. Thus, a probability that the power of the base station is switched off is higher when there are more negative values among the real number values of the base-station messages than when there are fewer negative values among the real number values of the base-station messages.

Referring to Equations 2 through 6, if power requested to switch on a base station is large, if a maximum data transmission capacity of the base station is small, if the number of terminals for receiving data transmission in cell coverage of the base station is small, or if transmission power between the base station and the terminals in the cell coverage is large, a large number of real number values of base-station messages are negative values. Thus, the number of negative values is larger when power requested to switch on the base station is larger than when power requested to switch on the base station is smaller. The number of negative values is larger when a maximum data transmission capacity of the base station is smaller than when the maximum data transmission capacity of the base station is larger. The number of negative values is larger when there is fewer number of terminals for receiving data transmission within cell coverage of the base station than when there is more number of terminals for receiving data transmission within cell coverage of the base station. The number of negative values is larger when transmission power between the base station and the terminals within the cell coverage is larger than when the transmission power between the base station and the terminals within the cell coverage is smaller.

Each terminal calculates a real number value of a terminal message regarding each of base stations from which data transmission is providable. In this case, each terminal may receive base-station messages having real number values from the base stations, and may calculate real number values individually regarding the base stations based on the received base-station messages. Each terminal transmits the terminal messages, having the real number values calculated with regard to the base stations, individually to the base stations. A real number value of a terminal message transmitted from each terminal to a base station may be calculated as shown in Equation 7.

[Equation 7]

$$\rho_{ia}^{(t)} = \min_{j \in N(a)/i} (P_{ja} - \alpha_{ja}^{(t)}) - P_{ia}$$

In this case, Equation 7 shows a terminal message transmitted from a terminal 'a' to a target base station 'i'.

The target base station 'i' indicates a base station to which a terminal message is transmitted. In Equation 7, $\rho_{ia}^{(t)}$ indicates a real number value of a terminal message calculated by the terminal 'a' at a point of time 't', $P_{ja}$ indicates transmission power between an adjacent base station 'j' and the terminal 'a', $\alpha_{ja}^{(t)}$ indicates a real number value of a base-station message calculated at the point of time 't' and transmitted to the terminal 'a' by the adjacent base station 'j', and $P_{ia}$ indicates transmission power between the target base station 'i' and the terminal 'a'.

In this case, as mentioned above, 't' indicates an identifier for temporally identifying base-station messages that are repeatedly transmitted.

In Equation 7, the adjacent base station 'j' is defined as $j \in N(a)/i$. That is, the adjacent base station 'j' indicates each of base stations other than the target base station 'i' from among base stations N(a) capable of providing data transmission to the terminal 'a'.

As such, $\min_{j \in N(a)/i}(P_{ja} - \alpha_{ja}^{(t)})$ indicates a smallest value obtained by comparing $P_{ja} - \alpha_{ja}^{(t)}$ values of base stations adjacent to the terminal 'a'. $\rho_{ia}^{(t)}$ is obtained by subtracting $P_{ia}$ from the smallest $P_{ja} - \alpha_{ja}^{(t)}$ of the base station.

As described above, a real number value of a terminal message is calculated based on transmission power between the terminal 'a' and the target base station 'i', transmission power between the terminal 'a' and adjacent base stations, and base-station messages received from the adjacent base stations.

The terminal 'a' calculates real number values of terminal messages regarding base stations 'i', 'j', and 'k' from which data transmission is providable by using the above-described method. The terminal 'a' transmits the terminal messages having the real number values calculated with regard to the base stations, individually to the base stations.

The terminal 'a' receives base-station messages from the base stations, and repeatedly calculates real number values of terminal messages regarding the base stations and transmits the terminal messages having the real number values calculated with regard to the base stations, individually to the base stations. Due to the above-described repeated message passing, the calculated real number values of the terminal messages are converged to constant values.

When real number values of terminal messages of each terminal with regard to adjacent base stations are converged to constant values, the terminal calculates a terminal message convergence value regarding each of the adjacent base stations. The terminal message convergence value is calculated as a sum of a real number value of a terminal message calculated with regard to each base station and a real number value of a base-station message received from the base station.

The terminal message convergence value may be calculated as shown in Equation 8.

[Equation 8]

$$b_a^{(t)} = \alpha_{ia}^{(t)} + \rho_{ia}^{(t-1)}$$

In this case, $b_a^{(t)}$ indicates a terminal message convergence value regarding the target base station 'i',

$\alpha_{ia}^{(t)}$ indicates a converged real number value of a base-station message transmitted from the target base station

'i', and $\rho_{ia}^{(t-1)}$ indicates a converged real number value of a terminal message calculated with regard to the target base station 'i'. In Equation 8, $\rho_{ia}^{(t-1)}$ may be $\rho_{ia}^{(t)}$ according to a temporal order between terminal messages and base-station messages.

Each terminal determines a base station from which data transmission is to be received, based on the terminal message convergence value calculated with regard to each of base stations. That is, if the terminal message convergence value calculated by a terminal with regard to a base station is a negative value, the terminal is disconnected from the base station. If the terminal message convergence value is a positive value, the terminal is connected to the base station and receives data transmission from the base station.

The terminal message convergence value is calculated based on converged real number values of terminal messages and converged real number values of base-station messages. The terminal message convergence value is influenced by the real number values of the terminal messages calculated while message passing is repeated.

As such, if a large number of real number values of terminal messages calculated by a terminal with regard to a base station are negative values, a probability that the terminal is disconnected from the base station is increased. According to Equations 7 and 8, if transmission power between a base station and a terminal is low, a probability that the terminal receives data transmission from the base station is increased. Thus, a probability that the terminal receives data transmission from the target base station is higher when transmission power between the target base station and the terminal is lower than when transmission power between the target base station and the terminal is higher.

Equation 9 arithmetically shows that a real number value of a terminal message is converged.

[Equation 9]

$$\rho_{ia}^{(t)} = \rho_{ia}^{(t-1)}$$

If real number values of terminal messages calculated by the terminal 'a' with regard to all base stations at a certain point of time 't' are the same as real number values of terminal messages at a point of time previous to the point of time 't', and then are changed no more at a subsequent point of time, it may be regarded that the real number values of the terminal messages are converged.

Repetition of base-station messages and terminal messages in terminals and base stations may be performed as shown in Sequence 1.

[Sequence 1]

$$\rho^{(0)} \to \alpha^{(1)} \to \rho^{(1)} \to \alpha^{(2)} \to \rho^{(2)} \to ... \to \alpha^{(N)} \to \rho^{(N)} \to \alpha^{(N+1)} \to \rho^{(N+1)}$$

At each point of time, terminals and base stations individually calculate real number values of base-station messages and terminal messages, and the calculated real number values are repeatedly received and transmitted.

When real number values of base-station messages and terminal messages of base stations and terminals are converged, each base station calculates a base-station message convergence value. Each base station is continuously switched on if the base-station message convergence value is a positive value, and is switched off if the base-station message convergence value is a negative value. Each of individual terminals calculates a terminal message convergence value regarding each base station, is connected to the base station if the terminal message convergence value is a positive value, and is disconnected from the base station if the terminal message convergence value is a negative value.

As described above, in a cellular network including a base station and adjacent base stations, each of the base station and the adjacent base stations may determine whether to switch off its own power based on repeated exchanges of terminal messages and base-station messages with terminals within its cell coverage, and each terminal in the cellular network may determine a base station from which data transmission is to be received, based on repeated exchanges of base-station messages and terminal messages with base stations capable of providing data transmission to the terminal.

In this case, calculated converged real number values of base-station messages and converged real number values of terminal messages correspond to best solutions of a combinatorial optimization problem for minimizing overall power consumption of a cellular network including a base station and adjacent base stations, from among available data transmission methods between base stations and terminals, which satisfy the amount of data requested by all terminals within the cellular network.

According to some example embodiments, base stations and terminals within a cellular network may find one best solution by exchanging messages of simple real number values with each other based on a message-passing algorithm until real number values of base-station message and real number values of terminal messages are converged to one solution.

As such, each base station may rapidly obtain a best solution of a base station switching off method, capable of minimizing power consumption in a cellular network, without performing complicated calculations. Accordingly, each base station may rapidly update the cellular network that varies according to migration of terminals.

Also, according to some example embodiments, since message passing is performed based on dispersed interactions of terminals and base stations within a cellular network, a base station may be easily switched off without using an additional processor such as a repeater or a controller.

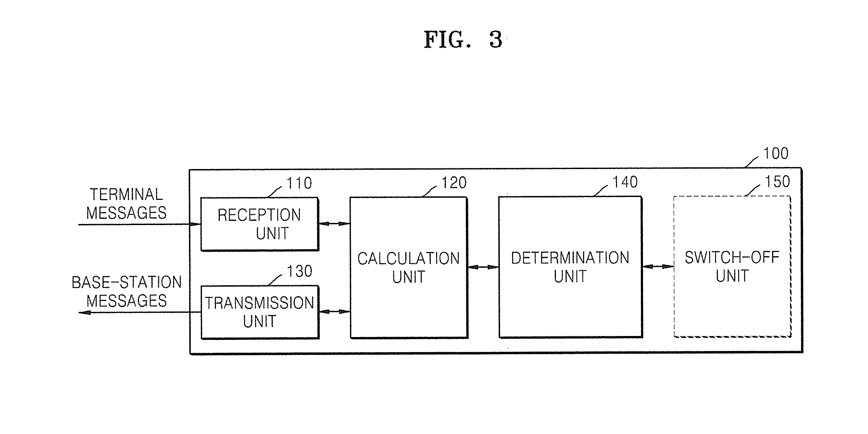

FIG. 3 is a block diagram of a base station 100 that switches off its own power by using message passing, according to some example embodiments. Referring to FIG. 3, the base station 100 includes a reception unit 110, a calculation unit 120, a transmission unit 130, and a determination unit 140. Also, the base station 100 may further include a switch-off unit 150.

In FIG. 3, for clarity, the base station 100 includes only elements related to some example embodiments. Accordingly, it would be understood by one of ordinary skill in the art that general-use elements other than the elements illustrated in FIG. 3 may be further included.

Referring to FIG. 3, the base station 100 illustrated in FIG. 3 corresponds to one of base stations for forming the cellular network system described above in relation to FIG. 2. Accordingly, the descriptions of a base station provided above in relation to FIG. 2 may not be provided below but may also be applied to the base station 100 illustrated in FIG. 3.

According to some example embodiments, each unit of the base station 100 may correspond to or may include at least one processor. As such, each unit of the base station 100 may be driven while being included in another hardware device such as a microprocessor or a general-use computer system.

The reception unit 110 receives terminal messages having real number values from terminals in cell coverage of the base station 100. In this case, the received terminal messages have real number values individually calculated by the terminals according to Equation 7 as described above in relation to FIG. 2.

The calculation unit 120 calculates real number values of base-station messages individually regarding the terminals based on the received terminal messages. The calculation unit 120 may calculate the real number values of the base-station messages according to Equation 2 as described above in relation to FIG. 2.

The transmission unit 130 transmits the base-station messages having the calculated real number values individually to the terminals. The terminals may receive the base-station messages, and may re-calculate the real number values of the terminal messages based on the received base-station messages.

That is, the reception unit 110, the calculation unit 120, and the transmission unit 130 repeatedly perform reception, calculation, and transmission until calculated real number values of the base-station message are converged to a constant value.

When the real number values of the base-station messages are converged, the calculation unit 120 calculates a base-station message convergence value, which is one real number value regarding all terminals, based on converged real number values of the terminal messages. In this case, the base-station message convergence value may be calculated according to Equation 6 as described above in relation to FIG. 2.

The determination unit 140 determines whether to switch off the base station 100, based on the calculated base-station message convergence value. If the base-station message convergence value is a negative value, the determination unit 140 determines to switch off the base station 100.

Also, the base station 100 may further include the switch-off unit 150. The switch-off unit 150 switches off the base station 100 according to a determination result of the determination unit 140.

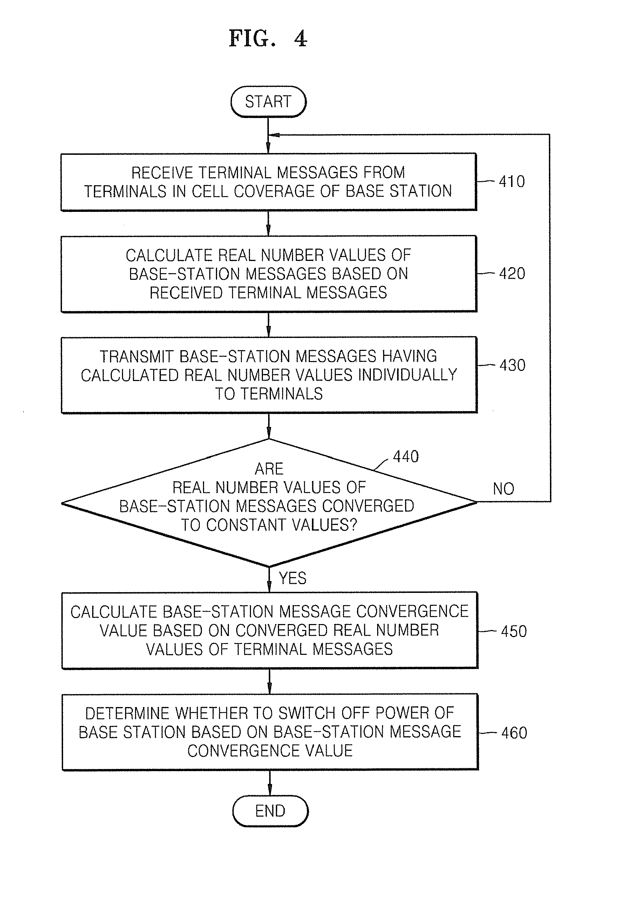

FIG. 4 is a flowchart of a method of switching off an individual base station in a cellular network by itself by using message passing, according to some example embodiments. Referring to FIG. 4, the method illustrated in FIG. 4 includes operations performed by the base station 100 illustrated in FIGS. 2 and 3 in time series. Accordingly, the descriptions of the base station 100 provided above in relation to FIGS. 2 and 3 may not be provided below but may also be applied to the method illustrated in FIG. 4.

In operation 410, the reception unit 110 receives terminal messages having real number values from terminals within cell coverage of the base station 100.

In operation 420, the calculation unit 120 calculates real number values of base-station messages individually regarding the terminals based on the received terminal messages. The calculation unit 120 may calculate the real number values of the base-station messages according to Equation 2 as described above in relation to FIG. 2.

In operation 430, the transmission unit 130 transmits the base-station messages having the calculated real number values individually to the terminals.

In operation 440, the calculation unit 120 determines whether the real number values of the base-station messages are converged to constant values. If the real number values are not converged, the method returns to operation 410 and message passing with the terminals is repeated. If the real number values are converged, the method proceeds to operation 450.

In some example embodiments, after the transmission unit 130 transmits the base-station messages, the calculation unit 120 determines whether the calculated real number values of the base-station messages are converged. However, the order of performing operations 430 and 440 may be reversed. That is, after the calculation unit 120 determines whether the calculated real number values of the base-station messages are converged, the transmission unit 130 may transmit the base-station messages having the calculated real number values individually to the terminals.

In operation 450, the calculation unit 120 calculates a base-station message convergence value, which is one real number value regarding the terminals, based on converged real number values of the terminal messages, which are received by the reception unit 110. In this case, the base-station message convergence value may be calculated according to Equation 6 as described above in relation to FIG. 2.

In operation 460, the determination unit 140 determines whether to switch off the base station 100, based on the base-station message convergence value.

Similarly to the above method performed by a base station, each terminal in the cellular network may determine a base station from which data transmission is to be received. Unlike the base station, each terminal calculates real number values of terminal messages regarding base stations based on base-station messages received from the base stations, and transmits the terminal messages having the calculated real number values individually to the base stations.

In this case, the real number values of the terminal messages calculated by the terminal with regard to the base stations may be calculated according to Equation 7 as described above in relation to FIG. 2.

After the terminal messages are calculated or transmitted, the terminal determines whether the calculated real number values of the terminal messages are converged to constant values. If the real number values are not converged, the terminal repeats message passing with the base stations. If the real number values are converged, the terminal calculates a terminal message convergence value. The terminal message convergence value may be calculated according to Equation 8 as described above in relation to FIG. 2.

Unlike the base-station message convergence value, which is one real number value regarding all terminals, the terminal message convergence value is calculated with regard to each of the base stations. That is, the terminal determines whether to receive data transmission from each of the base stations based on the terminal message convergence value regarding the base station. The terminal is connected to a base station of which the terminal message convergence value is a positive value, and is disconnected from a base station of which the terminal message convergence value is a negative value.

In this case, a base station from which the terminal receives data transmission corresponds to a best solution of a combinatorial optimization problem, and is determined to allow the terminal to be connected to only one base station.

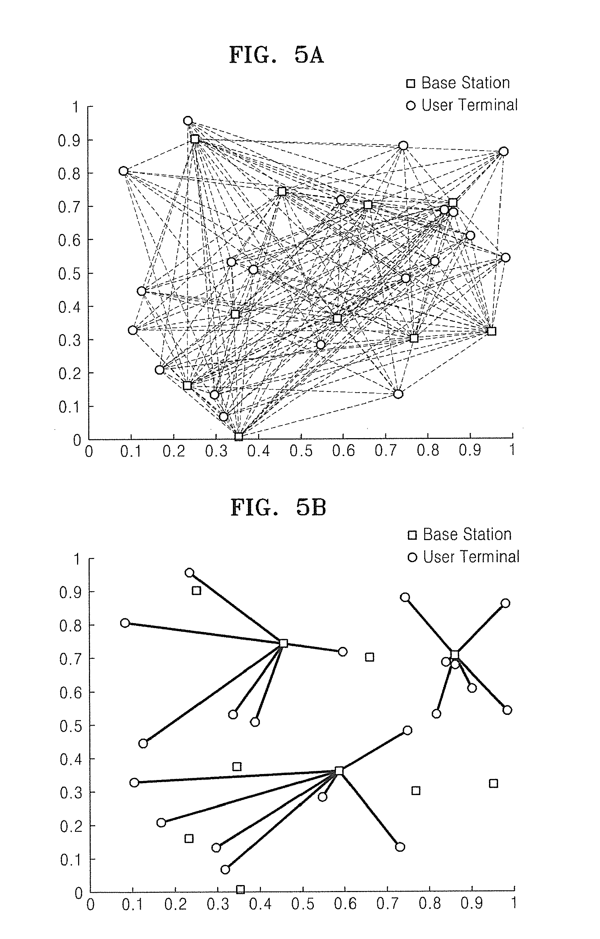

FIGS. 5A and 5B are graphs showing that a base station switching off method is applied to an arbitrary two-dimensional (2D) cellular network, according to some example embodiments.

Referring to 5A and 5B, ten base stations and twenty terminals exist in the 2D cellular network. FIG. 5A shows all available data transmission amount allocation methods in a cellular network that satisfies a data transmission amount condition between the ten base stations and the twenty terminals.

In this case, the data transmission amount condition indicates Conditions/Equations 1 described above in relation to FIGS. 1A and 1B. That is, the data transmission amount condition indicates that a maximum data transmission capacity of switched-on base stations satisfies the amount of data requested by all terminals in a region.

FIG. 5B shows a data transmission amount allocation method determined by using message passing as described above in relation to FIGS. 2 through 4, from among the data transmission amount allocation methods illustrated in FIG. 5A.

The data transmission amount allocation method illustrated in FIG. 5B satisfies the data transmission amount condition and corresponds to a best solution for minimizing power consumption in the cellular network.

According to this method, only three base stations are switched on and the other seven base stations are switched off. All terminals in the cellular network are connected to the three switched-on base stations.

That is, the determined data transmission amount allocation method may satisfy the amount of data requested by all of the twenty terminals in the cellular network by allowing only three of the ten base stations to be continuously switched on.

According to some example embodiments, by repeating message passing and thus allowing each of base stations and terminals in a cellular network to obtain one best solution ultimately converged to one value, an optimal base station switching off method capable of minimizing power consumption in the cellular network may be achieved. Since the determined base station switching off method is faster than other decision making methods such as a heuristic method, and obtains only one best solution, base stations to be switched off may be accurately determined to minimize power consumption.

As described above, according to some example embodiments, a cellular network system obtains one best solution for satisfying the amount of data requested by all terminals in a cellular network and minimizing overall power consumption in the cellular network, by using message passing of real number values between base stations and terminals. As such, since the cellular network system obtains one best solution appropriate for the cellular network, in comparison to other decision making methods such as a heuristic method, base stations to be switched off may be rapidly and accurately determined.

Also, in off-peak hours of data, a cellular network system may find an optimized base station switching off method capable of satisfying the amount of data requested by all terminals with minimum power in the cellular network, by using only message passing between base stations and terminals without using a controller or a repeater, and thus low-power green communication may be realized without additional costs.

Besides, a message passing method between base stations and terminals in a cellular network system may be performed as a fully distributed method, and thus may be used in, for example, an ad-hoc network as well as a cellular network.

Some example embodiments can be written as computer programs and can be implemented in general-use digital computers that execute the programs using a computer readable recording medium. Also, the data structure used in some example embodiments described above can be recorded on a computer readable recording medium via various means. Examples of the computer readable recording medium include magnetic storage media (e.g., read-only memory (ROM), floppy disks, hard disks, etc.), optical recording media (e.g., compact disc (CD)-ROMs, or digital video discs (DVDs)), etc.

It should be understood that the exemplary embodiments described therein should be considered in a descriptive sense only and not for purposes of limitation. Descriptions of features or aspects within each embodiment should typically be considered as available for other similar features or aspects in other embodiments.

**Claims**

1. A method of determining whether to switch off a base station's own power in the base station within a cellular network, the method comprising:

   receiving terminal messages having real number values from terminals within cell coverage of the base station;
   calculating real number values of base-station messages individually regarding the terminals based on the received terminal messages;
   transmitting the base-station messages having the calculated real number values individually to the terminals;
   repeatedly performing the receiving, the calculating, and the transmitting until the calculated real number values of the base-station messages are converged to constant values;
   when the real number values of the base-station messages are converged, calculating a base-station message convergence value, which is one real number value regarding the terminals, based on the converged real number values of the terminal messages; and
   determining whether to switch off the base station's own power based on the base-station message convergence value.

2. The method of claim 1, wherein the calculating of the real number values of the base-station messages comprises calculating the real number values of the base-station messages individually regarding the terminals based on the real number values of the terminal messages and their combinations according to whether a maximum data transmission rate of the base station is providable given an amount of data requested by each of the terminals or their combinations.

3. The method of claim 1 or 2, wherein the determining comprises determining to switch off the power of the base station if the base-station message convergence value is a negative value.

4. The method of any preceding claim, wherein in the calculating of the real number values of the base-station messages, a probability that the power of the base station is switched off is higher when there are more negative values among the real number values of the base-station messages than when there are fewer negative values among the real number values of the base-station messages,

a number of negative values is larger when power requested to switch on the base station is larger than a first figure than when power requested to switch on the base station is smaller than the first figure,

the number of the negative values is larger when a maximum data transmission rate of the base station is smaller than a second figure than when the maximum data transmission rate of the base station is larger than the second figure,

the number of the negative values is larger when there are fewer terminals for receiving data transmission within cell coverage of the base station than when there are more terminals for receiving data transmission within cell coverage of the base station, or

the number of the negative values is larger when transmission power between the base station and the terminals within the cell coverage is larger than a third figure than when the transmission power between the base station and the terminals within the cell coverage is smaller than the third figure.

5. The method of any preceding claim, wherein the real number values of the base-station messages are calculated according to an equation,

$$\alpha_{ia}^{(t)} = g_{ia}^{|N(i)|}(C_i - C_a) - \max(g_{ia}^{|N(i)|}(C_i - C_a), P_i)$$,

where $\alpha_{ia}^{(t)}$ indicates the real number value of the base-station message calculated at a point of time 't', 't' indicates an identifier for temporally identifying the base-station messages that are repeatedly transmitted, $|N(i)|$ indicates a number of the terminals other than a target terminal within the cell coverage of the base station, the target terminal indicating a terminal to which the base-station message is transmitted, $C_i$ indicates a maximum data transmission rate of the base station, $C_a$ indicates an amount of data requested by the target terminal, and $P_i$ indicates power requested to switch on the base station, and

wherein in the above equation, the function $g_{ia}^n$ is defined as

$$g_{ia}^n(z) = \max(g_{ia}^{n-1}(z), g_{ia}^{n-1}(z - C_{b_n}) + \rho_{ib_n}^{(t)})$$,

where 'n' and 'z' indicate variables of the function $g_{ia}^n$, $C_{bn}$ indicates an amount of data requested by adjacent terminals of the target terminal, $\rho_{ibn}$ indicates the real number values of the terminal messages received from the adjacent terminals, and the adjacent terminals indicate terminals other than the target terminal from among terminals within the cell coverage of the base station.

6. The method of any preceding claim, wherein the converged real number values of the base-station messages and the converged real number values of the terminal messages correspond to best solutions of a combinatorial optimization problem for minimizing overall power consumption of the cellular network including the base station and adjacent base stations, from among available data transmission methods between the base stations and the terminals, which satisfy an amount of data requested by all terminals within the cellular network.

7. The method of any preceding claim, wherein in the cellular network including the base station and adjacent base stations, each of the base station and the adjacent base stations determines whether to switch off its own power based on repeated exchanges of the terminal messages and the base-station messages with the terminals within its cell coverage, and each of the terminals within the cellular network determines a base station from which data transmission is to be received, based on repeated exchanges of the base-station messages and the terminal messages with the base stations capable of providing data transmission to the terminal.

8. The method of any preceding claim, wherein the real number values of the terminal messages of each terminal are calculated based on transmission power between the terminal and a target base station indicating a base station to which the terminal message is transmitted, transmission power between the terminal and the adjacent base stations, and the base-station messages received from the adjacent base stations, and
wherein the adjacent base stations indicate base stations other than the target base station from among the base stations capable of providing data transmission to the terminal.

9. The method of claim 8, wherein the terminal calculates a real number value of a terminal message regarding each of the adjacent base stations, calculates a sum of the calculated real number value and a real number value of a base-station message received from the target base station, and determines a base station from which data transmission is to be received, based on the calculated sum regarding each of the base stations.

10. The method of claim 9, wherein when the real number value of the terminal message regarding each of the adjacent base stations is converged to a constant value, if the calculated sum is a positive value, the terminal receives data transmission from the base station.

11. The method of claim 8, wherein a probability that the terminal receives data transmission from the target base station is higher when transmission power between the target base station and the terminal is lower than a fourth figure than when the transmission power between the target base station and the terminal is higher than the fourth figure.

12. A computer-readable recording medium having recorded thereon a program for executing the method of any one of claims 1 to 11.

13. A base station for determining whether to switch off its own power within a cellular network, the base station comprising:

a reception unit configured to receive terminal messages having real number values from terminals within cell coverage of the base station;
a calculation unit configured to calculate real number values of base-station messages individually regarding the terminals based on the received terminal messages;
a transmission unit configured to transmit the base-station messages having the calculated real number values individually to the terminals; and
a determination unit configured to determine whether to switch off the power of the base station based on a base-station message convergence value;
wherein the reception unit is further configured to repeatedly receive, the calculation unit is further configured to repeatedly calculate, and the transmission unit is further configured to repeatedly transmit until the calculated real number values of the base-station messages are converged to constant values, and
wherein when the real number values of the base-station messages are converged, the calculation unit is further configured to calculate the base-station message convergence value, which is one real number value regarding the terminals, based on the converged real number values of the terminal messages.

14. The base station of claim 13, wherein each terminal calculates a real number value of a terminal message regarding adjacent base stations, calculates a sum of the calculated real number value and a real number value of a base-station message received from a target base station, and determines a base station from which data transmission is to be received, based on the calculated sum regarding each of the base stations,
wherein when the real number value of the terminal message regarding each of the adjacent base stations is converged to a constant value, if the calculated sum is a positive value, the terminal receives data transmission from the base station, and
wherein the target base station indicates a base station to which the terminal message is transmitted, and the adjacent base stations indicate base stations other than the target base station from among base stations capable of providing data transmission to the terminal.

15. A cellular network system, comprising:

a plurality of base stations according to claim 13 or 14; and
a plurality of terminals for individually determining the base stations from which data transmission is received, from among the base stations capable of providing data transmission to the plurality of terminals, based on the message exchanges with the plurality of base stations,
wherein each of the terminals calculates a real number value of a terminal message regarding each of the base stations, calculates a sum of the calculated real number value and a real number value of a base-station message received from a base station, and determines a base station from which data transmission is to be received, based on the calculated sum regarding each of the base stations.

## FIG. 1A

■ Base Station
△ User Terminal

## FIG. 1B

■ Base Station (On)
▨ Base Station (Off)
△ User Terminal

FIG. 2

Base Station
User Terminal

# FIG. 3

TERMINAL
MESSAGES

RECEPTION
UNIT
110

CALCULATION
UNIT
120

DETERMINATION
UNIT
140

SWITCH–OFF
UNIT
150

BASE–STATION
MESSAGES

TRANSMISSION
UNIT
130

100

# FIG. 4

```
( START )
   │
   ▼
┌─────────────────────────────────────────┐
│ RECEIVE TERMINAL MESSAGES FROM          │─ 410
│ TERMINALS IN CELL COVERAGE OF BASE STATION│
└─────────────────────────────────────────┘
   │
   ▼
┌─────────────────────────────────────────┐
│ CALCULATE REAL NUMBER VALUES OF         │
│ BASE-STATION MESSAGES BASED ON          │─ 420
│ RECEIVED TERMINAL MESSAGES              │
└─────────────────────────────────────────┘
   │
   ▼
┌─────────────────────────────────────────┐
│ TRANSMIT BASE-STATION MESSAGES HAVING   │
│ CALCULATED REAL NUMBER VALUES INDIVIDUALLY│─ 430
│ TO TERMINALS                            │
└─────────────────────────────────────────┘
   │
   ▼
        ARE                          ╱ 440
  REAL NUMBER VALUES OF
 BASE-STATION MESSAGES CONVERGED        NO
   TO CONSTANT VALUES?
   │
   │ YES
   ▼
┌─────────────────────────────────────────┐
│ CALCULATE BASE-STATION MESSAGE CONVERGENCE│
│ VALUE BASED ON CONVERGED REAL NUMBER    │─ 450
│ VALUES OF TERMINAL MESSAGES             │
└─────────────────────────────────────────┘
   │
   ▼
┌─────────────────────────────────────────┐
│ DETERMINE WHETHER TO SWITCH OFF POWER OF│
│ BASE STATION BASED ON BASE-STATION MESSAGE│─ 460
│ CONVERGENCE VALUE                       │
└─────────────────────────────────────────┘
   │
   ▼
 ( END )
```

## FIG. 5A

## FIG. 5B

Europäisches
Patentamt

European
Patent Office

Office européen
des brevets

**EUROPEAN SEARCH REPORT**

Application Number

EP 13 19 3153

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2010/151184 A1 (ERICSSON TELEFON AB L M [SE]; JOHANSSON NIKLAS [SE]; MILDH GUNNAR [SE]) 29 December 2010 (2010-12-29)<br>* abstract *<br>* page 9, lines 9-26 *<br>* page 10, line 10 - page 11, line 17 *<br>* page 12, line 22 - page 14, line 6 *<br>* figures 4-6 * | 1-15 | INV.<br>H04W52/02<br>H04W84/04<br>H04W88/08 |
| A | WO 2011/138346 A1 (KONINKL KPN NV [NL]; TNO [NL]; JORGUSESKI LJUPCO [NL]; LITJENS REMCO []) 10 November 2011 (2011-11-10)<br>* abstract *<br>* page 7, line 34 - page 13, line 16 *<br>* figures 1A,1B,2A,2B,3,4 * | 1-15 | |
| A | EP 2 141 947 A1 (NOKIA SIEMENS NETWORKS OY [FI]) 6 January 2010 (2010-01-06)<br>* paragraphs [0038] - [0047] *<br>* figures 1-4 * | 1-15 | |
| A | "3rd Generation Partnership Project;Technical Specification Group Services and System Aspects; Telecommunication management;Study on Energy Savings Management (ESM)(Release 9)",<br>3GPP DRAFT; 32826-200, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,<br>vol. SA WG5, no. Xiamen; 20100301,<br>15 March 2010 (2010-03-15), pages 1-33, XP050440209,<br>[retrieved on 2010-03-15]<br>* par. 4.1, 4.2, 5.1, 5.1.1, 6.3 *<br>* figures 4.2.1,6.3,6.3.1,6.3.2,6.3.3,6.3.4 * | 1-15 | TECHNICAL FIELDS SEARCHED (IPC)<br><br>H04W |

The present search report has been drawn up for all claims

| Place of search | Date of completion of the search | Examiner |
|---|---|---|
| Berlin | 21 October 2014 | Bittermann, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 19 3153

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2014

| Patent document cited in search report | Publication date | Patent family member(s) | Publication date |
|---|---|---|---|
| WO 2010151184 A1 | 29-12-2010 | CN 102461281 A<br>EP 2446672 A1<br>US 2012100845 A1<br>WO 2010151184 A1 | 16-05-2012<br>02-05-2012<br>26-04-2012<br>29-12-2010 |
| WO 2011138346 A1 | 10-11-2011 | EP 2567561 A1<br>US 2013053039 A1<br>WO 2011138346 A1 | 13-03-2013<br>28-02-2013<br>10-11-2011 |
| EP 2141947 A1 | 06-01-2010 | NONE | |

EPO FORM P0459

For more details about this annex : see Official Journal of the European Patent Office, No. 12/82